# EUROPÄISCHE PATENTSCHRIFT

(11) **EP 0 807 797 B1**
(45) Veröffentlichungstag und Bekanntmachung des Hinweises auf die Patenterteilung: **18.12.2002**
(21) Anmeldenummer: 97107275.6
(22) Anmeldetag: 02.05.1997
(51) Int. Cl.: F41H 5/04

(54) **Durchschusshemmende Verglasung sowie deren Verwendung**
Bullet resistant glass and use thereof
Vitrage de sécurité anti-balles et utilisation d'un tel vitrage

(30) Priorität: 14.05.1996 DE 19619357
(43) Veröffentlichungstag der Anmeldung: 19.11.1997
(73) Patentinhaber: Röhm GmbH & Co. KG, 64293 Darmstadt (DE)
(72) Erfinder: Jansa, Andreas, 2440 Gramatneusiedl (AT); Schöla, Egbert, Dr., 7052 Müllendorf (AT); Seelmann, Peter, 1238 Wien (AT)

(56) Entgegenhaltungen:
- WO-A-90/01100
- DE-A- 2 424 255
- DE-A- 3 022 655
- US-A- 5 372 866

## Beschreibung

Die Erfindung liegt auf dem Gebiet von durchschußhemmenden Verglasungsmaterialien, die den Durchgang von Geschossen aus unterschiedlichen Arten von Waffen verhindern. Insbesondere bezieht sich die Erfindung auf eine durchschußhemmende Verglasungen, die den Angriffsbeanspruchungen der Klasse B4 gemäß Entwurf der ÖNORM EN 1063 vom April 1993 widersteht, wobei Faustfeuerwaffen vom Kaliber 44 Magnum mit einem Tombak-Vollmantelgeschoß / Flachkopfgeschoß / Weichkern Blei mit Stahlpenetrator (Typ SS 109) mit einer Masse von 15,6 ± 0,1 g aus einer Schußentfernung von 5,00 m und einer Auftreffgeschwindigkeit von 440 ± 10 m/s bei drei Treffern, die im Abstand von 120 ± 10 mm liegen, nicht zu einem funktionellen Versagen der durchschußhemmenden Verglasung führen.

Durchschußhemmende Verglasungen werden heutzutage bereits eingesetzt, und zwar insbesondere in Bereichen von Geldinstituten, um derart einerseits das ungestörte Beobachten aller Vorgänge sowohl von innerhalb der Kasse nach außerhalb der Kasse, wie auch von außerhalb nach innerhalb der Kasse zu ermöglichen, andererseits aber dem über das Geld verfügenden Kassierer die erforderliche Sicherheit zu geben.

Weiterhin sind derartige durchschußhemmende Einrichtungen auch in anderen öffentlichen Institutionen bekannt, und es ist schließlich denkbar, daß derartige Einrichtungen auch in entfernt liegenden Wohnhäusern oder dergleichen als Fenster eingebaut werden, um dadurch die Inhaber vor Einbrüchen und Überfällen zu schützen.

Lange Zeit wurden zur Herstellung durchschußhemmender Verglasungen Glasscheiben aus anorganischem Mineralglas eingesetzt, wobei die bekannten Konstruktionen im Prinzip aus mehreren miteinander verbundenen oder dicht aneinander anliegenden Scheiben bestanden, die, um die erforderliche Durchschußhemmung zu erreichen, eine erhebliche Dicke und damit ein erhebliches Gewicht aufweisen mußten. Dies führte in vielen Fällen zu Konstruktionsschwierigkeiten, da Unterkonstruktionen, welche die durchschußhemmenden Scheiben tragen sollten, entsprechend stark dimensioniert werden mußten.

Aus diesem Grund setzen sich in neuerer Zeit vermehrt Verglasungen mit durchschußhemmender Wirkung durch, welche aus transparenten Kunststoffmaterialien bestehen. Hierbei werden Scheiben aus Polymethylmethacrylat (PMMA), sogenanntem Acrylglas, bevorzugt, da dieses Material den Vorteil hat, nur ein spezifisches Gewicht von 1,18 aufzuweisen, so daß es damit nur etwa halb so schwer wie normales Fensterglas oder Sicherheitsglas ist. Allerdings ist bei ausschließlicher Verwendung von Scheiben beispielsweise aus Acrylglas, zur Erreichung der erforderlichen Durchschußhemmung eine Stärke der Scheiben aus Acrylglas in Kauf zu nehmen, welche in vielen Einsatzbereichen als störend empfunden wird.

Aus der DE 24 24 255 sind nun beschußfeste Verglasungen bestehend aus mehreren aneinander anliegenden bzw. miteinander verbundenen lichtdurchlässigen Scheiben bekannt geworden, bei denen es sich um eine Kombination einer auf der beschußgefährdeten Seite der Verglasung angeordneten, aus Polymethacrylsäureester (Acrylglas) bestehenden Scheibe mit einer auf ihrer Rückseite angeordneten Scheibe aus Polycarbonat handelt. Derlei Kombinationen aus Acrylglasscheiben und Polycarbonatscheiben, wobei die Polycarbonatscheibe eine wesentlich geringere Stärke als die Acrylglasscheibe aufweist, sollen insgesamt zu einer wesentlich dünneren Ausführung der beschußfesten Verglasung führen, als dies eine vollständige Ausführung in Acrylglas ermöglichen würde. Ferner wird in der DE 24 24 255 angegeben, daß die Acrylglasscheibe an der beschußgefährdeten Seite der beschußfesten Verglasung angeordnet sein muß, damit bei einem eventuellen Beschuß die Kugel erst die Acrylglasscheibe durchdringen muß, um dann höchstwahrscheinlich durch die elastischere Polycarbonatscheibe aufgefangen zu werden, wobei sie bereits ihre Anfangsenergie in der Acrylglasscheibe abgegeben hat.

Obwohl die aus der DE 24 24 255 bekannte Kombination schon eine deutliche Verbesserung gegenüber der Verwendung mehrerer miteinander lose oder fest verbundener Acrylglasscheiben beinhaltet, so sind die resultierenden Scheibenaufbauten der Verglasungen immer noch verhältnismäßig dick, wenn die Verglasungen auch Beschußklassen widerstehen sollen, welche massivere Angriffsbeanspruchungen zum Inhalt haben. So ist davon auszugehen, daß Faustfeuerwaffen, welche ein Magnum-Kaliber aufweisen und aus geringen Entfernungen abgefeuert werden, Auftreffgeschwindigkeiten zeigen, die zu einem Versagen der beschußfesten Verglasung, wie sie in der DE 24 24 255 geschildert werden, führen.

Die FR 2 634 417 offenbart ballistische und explosionshemmende Verglasungen aus vier Komponenten, die miteinander zu einem Verbundglas kombiniert sind. Der beschußgefährdeten Angriffsseite zugewandt findet sich zunächst eine relativ dicke Scheibe aus mineralischem Silikatglas, an die sich eine Polycarbonatscheibe anschließt, welche mit der Mineralglasscheibe mittels einer etwa 5 mm starken Harzschicht eines Elastomers auf Silikonbasis verklebt ist. Auf der Rückseite schließlich ist eine PMMA-Scheibe angeordnet, welche mit der Polycarbonatscheibe wiederum unter Verwendung desselben Klebers verbunden ist, wie er für die Zwischenschicht zwischen Mineralglas und Polycarbonatscheibe eingesetzt wird. Bei den vier genannten Schichten handelt es sich um essentielle Schichten, wobei die Mineralglasscheibe verglichen mit den Kunststoffscheiben aus Polycarbonat und PMMA derartig dick ausgeführt ist, daß der gezeigte Aufbau keine wesentliche Gewichtsersparnis gegenüber nur aus Mineralglas bestehenden beschußhemmenden Verglasungen aufweist.

Geschoßfeste transparente Elemente sind u. a. auch der US 4,594,290 zu entnehmen. Hierin wird ein Element beschrieben, welches transparente Scheiben aus Acrylglas und Polycarbonat aufweist, welche mit einem transparenten Polyurethankleber miteinander verbunden sind. In Fortbildung des aus der US 4,594,290 bekannten Gegenstands offenbart die WO 93/16872 Elemente mit einer unidirektionalen Geschoßwiderstandscharakteristik, bei denen die Acrylglasscheibe eine Dicke von 7,5 bis 9 mm und das rückseitig angeordnete Polycarbonatelement eine Dicke von 9,5 bis 11 mm aufweisen, wobei diese Elemente ebenfalls mittels eines transparenten Polyurethanmaterials miteinander verklebt sind. Die Dicke der Klebeschicht beträgt etwa 2 mm, wobei ein entsprechender Aufbau einem Uzi 9 mm-FMG(Full Metal Jacket)-Geschoß widersteht. Obwohl sich gemäß der WO 93/16872 ein relativ dünner Gesamtaufbau von ca. 20 mm realisieren läßt, was zu einem sehr geringen Gewicht der schußsicheren Verglasung führt, ist davon auszugehen, daß die durch das Prüfgeschoß einer Uzi 9 mm FMG verursachten Energien einer deutlich geringeren Widerstandsklasse zuzuordnen sind, als dies die Klasse B4 gemäß Entwurf ÖNORM EN 1063 vorsieht. So beträgt die Energie der Projektile der UZZI-Maschinenpistole nur 1/3 der Magnum 44-Geschosse, weswegen die UZZI als B II klassifiziert wird.

Die US 5,318,853 bezieht sich auf beschußhemmende und widerstehende Glaskunststofflaminate für Sicherheitsanwendungen. Typischerweise bestehen die Laminate gemäß der US 5,318,853 aus Glas- und Kunststoffscheiben, z. B. aus Polycarbonat, die mit einem Adhäsionsmittel auf Basis eines lösungsmittelfreien Alkydharzes miteinander verklebt werden. Auch hier ist aufgrund des vorgeschlagenen Aufbaus davon auszugehen, daß die Energieabsorption im wesentlichen in der relativ dicken Mineralglasscheibe geschehen muß, so daß recht schwere Verbundgläser mit durchschußhemmender Wirkung resultieren.

In Anbetracht des hierin angegebenen und diskutierten Standes der Technik ist es mithin eine Aufgabe der Erfindung, eine durchschußhemmende Verglasung zur Verfügung zu stellen, die auch sehr energiereichen Geschossen, wie sie in der Beschußklasse B4 beschrieben sind, widersteht, wobei sowohl die Durchdringung der Verglasung durch das Geschoß als auch die Bildung von Splittern zu vermeiden sind und wobei zugleich ein möglichst leichter und dünner Aufbau der Verglasung resultieren soll, so daß deren Einsatzmöglichkeiten erheblich vergrößert werden. Außerdem sollen die Handhabung der Scheiben ebenso wie deren Verarbeitung und Herstellung erleichtert werden. Darüber hinaus sollen die erfindungsgemäßen durchschußhemmenden Verglasungen auch besonders vielseitig einsetzbar sein, wobei günstigenfalls von einer im Rahmen der Erfindung zu verwendenden Verglasung auch über die Klasse B4 hinausgehende Anforderungen, wie sie beispielsweise in den Klassen B5 bis B7 oder teilweise in den Klassen SG1 und SG2 der ÖNORM EN 1063 vom 1. Juni 1993 (Entwurf) beschrieben werden, erfüllt werden können.

Gelöst werden diese sowie weitere nicht im einzelnen hierin wörtlich wiedergegebene Aufgaben mit einer durchschußhemmenden Verglasung gemäß der eingangs genannten Art mit den Merkmalen des kennzeichnenden Teils des Anspruches 1. Vorteilhafte Ausgestaltungen der erfindungsgemäßen durchschußhemmenden Verglasung werden in den auf Anspruch 1 rückbezogenen Unteransprüchen unter Schutz gestellt. Im Hinblick auf die Verwendung stellt Anspruch 10 eine Lösung der der Erfindung zugrundeliegenden Aufgaben dar.

Dadurch, daß bei einer durchschußhemmenden Verglasung aus einer Kombination von zwei oder mehreren aneinander anliegenden oder miteinander verbundenen lichtdurchlässigen Scheiben, mit wenigstens einer Acrylglasscheibe und einer der beschußgefährdeten Angriffsseite abgewandten rückseitigen splitterbindenden Scheibe aus Polycarbonat, die Kombination wenigstens eine nicht außenliegende einoder mehrlagige Kunststoffolie auf Basis von PVC-, PCund/oder PET-Materialien mit einer Dicke zwischen 20 und 500 µm aufweist, wobei die Folie selbstklebend oder durch Verklebung zwischen den Scheiben fixiert ist, gelingt es in nicht ohne weiteres vorhersehbarer oder aus dem Stand der Technik ableitbarer Weise,
- die Dicke der Kombination zu reduzieren,
- eine deutliche Gewichtsersparnis zu erzielen,
- eine volle Durchsichtigkeit und Lichtdurchlässigkeit der Verglasungskombination zu gewährleisten,
- die Durchdringung durch B4-Klasse-Geschosse sicher zu vermeiden,
- zugleich die Durchdringung selbst durch B7-Klasse-Geschosse weitestgehend zu vermeiden,
- in jedem Fall den Abgang von Splittern an der Rückseite auszuschließen,
- eine thermische Verformbarkeit der Kombination zu ermöglichen,
- in bevorzugter Ausführungsform eine kratzfeste Angriffsseite zu schaffen und
- ebenfalls in bevorzugter Ausführungsform eine Zerstörung der gesamten Verglasung durch Gewalteinwirkung, wie Schlag, Hieb oder Stoß, durch eine zusätzliche Splitterbindung innerhalb der erfindungsgemäßen durchschußhemmenden Verglasungskombination zu erreichen.

Dabei hat die erfindungsgemäße durchschußhemmende Verglasung zwar mit dem Stand der Technik gemein, daß auf der Rückseite der Verglasung eine zur Splitterbindung geeignete Scheibe aus Polycarbonat angeordnet ist, wobei mit Rückseite der Verglasung die der beschußgefährdeten Angriffsseite abgewandte äußerste Seite der durchschußhemmenden Verglasung der Erfindung gemeint ist, ein wesentlicher Unterschied gegenüber den aus dem Stand der Technik bekannten durchschußhemmenden Verglasungen besteht jedoch darin, daß anstelle von beispielsweise bekanntermaßen eingesetzten Polyurethanklebern oder dergleichen, die eine relativ große Schichtdicke von etwa 2 mm besitzen, im Rahmen der Erfindung ein- oder mehrlagige Kunststoffolien von relativ geringer Dicke eingesetzt werden. Im Sinne der Erfindung werden die genannten einoder mehrlagigen Kunststoffolien jeweils in Inneren einer durchschußhemmenden Verglasungskombination angeordnet, d. h., sie bilden in keinem Fall eine abschließende Schicht an der Rückseite oder an der Angriffsseite. Dabei lassen sich die hierin weiter oben genannten vorteilhaften Eigenschaften überraschenderweise durch Kombination von wenigstens drei Scheiben, Folien oder Schichten aus unterschiedlichen Materialien erzielen. In diesem Zusammenhang war es besonders überraschend, daß durch die Kombination einer auf der beschußgefährdeten Seite angeordneten, aus PMMA (Acrylglas) bestehenden Scheibe, einer dünnen, etwa 20 bis 500 µm, bevorzugt 50 bis 300 µm, dicken Folie, die auf der Acrylglasscheibe fixiert wird, und einer Abschlußscheibe aus Polycarbonat, welche sich als Rückseite an die Folie anschließt, ein sehr einfacher und insbesondere einfach herstellbarer Aufbau einer beschußhemmenden Verglasungskombination erzielen läßt, welcher enorm hohen Angriffsbeanspruchungen widersteht, und wobei dennoch gegenüber den bisher bekannten Acrylglasscheiben bzw. Kombinationen eine erheblich dünnere Ausbildung möglich ist, so daß hierdurch eine deutliche Gewichtsersparung möglich wird.

Gegenüber vorbekannten Kombinationen aus Acrylglas- und Polycarbonatscheiben, welche mit Polyurethanharzen verklebt sind, ist dabei insbesondere die gemäß einer sehr einfachen erfindungsgemäßen Ausführungsform eingesetzte ein- oder mehrlagige Kunststoffolie deutlich dünner ausgebildet (20 bis 500 µm, verglichen mit etwa 2 mm gemäß dem Stand der Technik), wobei trotzdem eine bessere durchschußhemmende Wirkung resultiert.

Dabei ist insbesondere hervorzuheben, daß gegenüber den bisher zum Stand der Technik gehörenden beschußfesten Scheiben durch die sehr einfache erfindungsgemäße Kombination eine sehr leichte, voll durchsichtige und voll lichtdurchlässige Scheibe geschaffen wird, die der Konstruktion neue Möglichkeiten gibt und den Einsatz dieser Scheiben auch in weiten Bereichen ermöglicht, die bisher aus Kostengründen nicht mit beschußfestem Sicherheitsglas ausgerüstet werden konnten. Ein weiterer Vorzug der Erfindung besteht darin, daß der erfindungsgemäße Verbund thermisch verformt werden kann, so daß auch gewisse Biegeradien realisierbar sind. Weiterhin ist es möglich, erfindungsgemäße Verbunde einzufärben (beispielsweise das Acrylglas), so daß auch optisch attraktive Gestaltungsmöglichkeiten verfügbar sind.

Bei den im Rahmen der Erfindung einsetzbaren Kunststoffolien handelt es sich um ein- oder mehrlagige Folien auf Basis von Polyvinylchlorid (PVC), Polycarbonat (PC) und/oder Polyethylenterephthalat-Materialien (PET). Sofern PVC oder Polycarbonat als Folienmaterial dienen, sind einlagige Kunststoffolien bevorzugt, wobei deren Transparenz im allgemeinen etwas geringer ist als die der Polyethylenterephthalat-Materialien. Sofern mehrlagige Kunststoffolien verwendet werden, so sind solche auf Basis von PET bevorzugt. Besonders zweckmäßig ist eine vierlagige Polyterephthalsäureethandiolester-Folie, welche eine 100 %ige Farbechtheit, eine ausgezeichnete Transparenz und eine äußerst geringe Reduzierung des sichtbaren Lichtes um nur 6 % aufweist. Die Dicke einer solchen Folie ist bevorzugt 100 - 200 µm, sehr zweckmäßig sind 125 - 180 µm.

Die gemäß der Erfindung einzusetzenden Scheiben aus Polycarbonat oder Acrylglas sind dem Fachmann geläufig und nach bekannten Verfahren erhältlich.

Gemäß einer ersten Ausführungsform der Erfindung ist die durchschußhemmende Verglasung dadurch gekennzeichnet, daß die Scheiben und Folien dicht aneinanderliegen und mit einem Rahmen fixiert sind. Demnach ist es als vollkommen ausreichend zu betrachten, um die vorteilhaften Wirkungen gemäß der Erfindung zu erzielen, die Scheiben- und Folienmaterialien, welche zur Verwirklichung des Aufbaus gemäß der Erfindung einzusetzen sind, dicht anliegend in der gewünschten Reihenfolge anzuordnen, wobei darauf zu achten ist, daß eine Polycarbonatscheibe immer als Abschluß- bzw. Rückscheibe anzuordnen ist. Dabei ist es vorteilhaft, die dicht aneinanderliegend angeordneten Scheiben fest miteinander über eine Rahmenkonstruktion (beispielsweise ein Klebeband oder durch Verklebung) zu verbinden.

In einer anderen bevorzugten Ausführungsform besteht die Möglichkeit, daß die Polycarbonatscheibe zur Ausbildung eines innigen und dichten Verbundes der Scheiben und der Folie untereinander mit der Folie verbunden ist, beispielsweise durch Verkleben oder sonstige chemische Verfahren.

In jedem Falle jedoch sind die am Aufbau einer durchschußhemmenden Verglasung der Erfindung beteiligten ein- oder mehrlagigen Kunststoffolien zumindest einseitig selbstklebend oder durch einseitige Verklebung mit einer der am Aufbau beteiligten Kunststoffscheiben verbunden. Diese einseitige Verbindung dient zur Fixierung der verhältnismäßig dünnen Folie vor der eigentlichen Zusammenfügung der am Aufbau der erfindungsgemäßen durchschußhemmenden Verglasung beteiligten Scheiben und Folien. Hierbei ist es besonders zweckmäßig, wenn die Folie oder die Folien auf der in der Kombination innenliegenden Seite einer Acrylglasscheibe durch Verklebung fixiert ist. Die Rückseite der Folie, welche der Acrylglasscheibe abgewandt ist, kann dann optionell, wie bereits hierin erwähnt, durch Verklebung mit der Polycarbonatscheibe dauerhaft verbunden werden.

Obwohl die Dicken der am erfindungsgemäßen Aufbau beteiligten Kunststoffglasscheiben über weite Bereiche variierbar sind, wobei sich die Dicken u. a. an der gewünschten Beschußfestigkeit und Widerstandsfähigkeit gegen bestimmte Angriffsbeanspruchungen orientieren können, hat es sich als sehr zweckmäßig erwiesen, um den Durchschuß eines B4-Klasse-Geschosses zu verhindern, wenn eine Acrylglasscheibe am Aufbau gemäß der Erfindung beteiligt ist oder wenn mehrere Acrylglasscheiben miteinander kombiniert werden, wenn die Gesamtdicke der am Aufbau beteiligten Acrylglasscheiben etwa > 20 mm ist. Diese Gesamtdicke führt sehr wirkungsvoll zur Absorptions des größten Teils der durch das Geschoß auf die beschußhemmende Verglasung übertragenen Energie.

Zwar ist auch mit Gesamtdicken von Acrylglasscheiben deutlich unterhalb von 20 mm eine recht gute durchschußhemmende Wirkung erzielbar, es ist jedoch in diesem Fall üblicherweise dafür Sorge zu tragen, daß die Dicke anderer Schichten des erfindungsgemäßen Aufbaus vergrößert ist, um genügend Material für eine notwendige Energieabsorption der Geschosse zur Verfügung zu stellen.

In einer weiters bevorzugten Ausführungsform ist die durchschußhemmende Verglasung gemäß der Erfindung dadurch gekennzeichnet, daß ein oder mehrere Polycarbonatscheiben in der Kombination enthalten sind, von denen eine die Rückseite bildet, wobei die Gesamtdicke der Polycarbonatscheiben ≥ 5 mm ist. In Verbindung mit der Gesamtdicke der Acrylglasscheibe(n) von > 20 mm schlägt die Erfindung damit vor, daß die Polycarbonatscheibe eine deutlich geringere Stärke aufweist als die Acrylglasscheibe, wobei sich diese deutlich geringere Stärke in Verbindung mit der rückseitigen Anordnung wenigstens einer Polycarbonatscheibe als vollkommen ausreichend für die Vermeidung abgehender Splitter erwiesen hat.

In diesem Zusammenhang kann die Polycarbonatscheibe, welche essentiell als Rückseite der erfindungsgemäßen Verglasung in Frage kommt, zwar dünner als 5 mm ausgeführt sein, wenn eine weitere Polycarbonatscheibe im erfindungsgemäßen Verbund vorgesehen ist und die Gesamtdicke der Polycarbonatscheiben mindestens = 5 mm ist, es ist jedoch bei weitem bevorzugt, die Abschlußscheibe an der Rückseite der erfindungsgemäßen Verglasung in einer Dicke von etwa 5 mm oder mehr auszubilden. Es hat sich nämlich bei der erfindungsgemäßen Anordnung herausgestellt, daß gerade der Vermeidung der Freisetzung von eventuellen Splittern eine hohe Bedeutung beikommt, so daß hier ggf. vorhandenes Sicherheitspotential nicht zugunsten einer weiteren Gewichtsersparnis aufgegeben werden sollte.

Betreffend der Verwendung von ein- oder mehrlagigen Sicherheitsfolien ist ebenfalls anzumerken, daß zwar einlagige Folien in Frage kommen, daß es jedoch für die Absorption freiwerdender Geschoßenergie bei weitem bevorzugt ist, wenn mehrlagige Folien oder mehrere einlagige oder mehrlagige Folien eingesetzt werden. Daher ist es im Rahmen der Erfindung besonders vorteilhaft, wenn die Gesamtzahl aller Lagen der ein- oder mehrlagigen Folien, welche im erfindungsgemäßen Aufbau enthalten sind, ≥ 4 ist. Diese Forderung wird beispielsweise durch die weiter oben hierin genannte bevorzugte vierlagige Folie ausgezeichnet erfüllt.

In einer weiteren bevorzugten Ausführungsform weist die oder eine der Acrylglasscheiben eingebettete monofile Fäden aus einem anderen Kunststoffmaterial auf. Kunststoffglasscheiben aus Acrylglas mit eingebetteten Kunststoffäden aus einem anderen Material sind an sich bekannt. Die innenliegenden Kunststoffäden, -bänder, -gitter oder -netze sind aus einem Kunststoffmaterial, welches bevorzugt eine höhere Scherstabilität sowie eine höhere Viskosität als der sie umgebende Matrixkunststoff (Acrylglas) aufweist. Beispiele für die Kunststoffmaterialien, die für die innenliegenden Kunststoffäden in Frage kommen, sind insbesondere kristalline Polyamide. Solche Scheibenelemente mit innenliegenden Kunststoffäden aus kristallinem Polyamid werden entweder nach einem diskontinuierlichen Gießverfahren oder durch kontinuierliche Coextrusion zweier unverträglicher thermoplastischer Kunststoffe hergestellt. Die im Inneren der Kunststoffscheibe des Verbundes eingebetteten Kunststoffäden können so angeordnet sein, daß sie parallel zueinander in nur einer Richtung verlaufen, oder so, daß sie jeweils parallel zueinander in zwei Richtungen verlaufen. Im letzteren Falle können die beiden Richtungen einen Winkel von 90° oder auch einen von 90° abweichenden Winkel bilden. Werden Kunststoffbänder eingebettet, werden sie zweckmäßigerweise so angeordnet, daß sie parallel zueinander in nur einer Richtung verlaufen.

Schließlich ist es möglich, die innenliegenden Kunststoffäden auch kontrastreich oder andersfarbig einzufärben, um damit gezielte Wirkungen hervorzurufen.

Die Einbettung von Kunststoffäden in eine der Acrylglasscheiben oder in die Acrylglasscheibe hat den Vorteil, daß der entstehende optische Eindruck eine gewisse Solidität der durchschußhemmenden Verglasung vermittelt und signalisiert, daß hier der Sicherheitsaspekt besonders betont wird. Insbesondere ist es dabei vorteilhaft, daß bei Beschädigungen kompakter Art, beispielsweise bei Gewaltanwendung durch Schlag oder anderweitige Zerstörung, entstehende einzelne Fragmente der Acrylglasscheiben an den innenliegenden Fäden oder Bändern aus vorzugsweise Polyamid hängenbleiben, wodurch eine vollständige Zerstörung der durchschußhemmenden Verglasung gemäß der Erfindung verhindert wird. Somit ist auch eine Einbruchsicherung mit der durchschußhemmenden Verglasung gemäß der Erfindung möglich. Dies ist nur und besonders bevorzugt durch die integrierte Splitterbindung und nicht die rückseitige Splitterbindung mit einer Polycarbonatscheibe möglich, da letztere nur das rückseitige Freiwerden von Splittern, wie es bei Beschuß auftritt, vermeidet.

Die durchschußhemmende Verglasung gemäß der Erfindung besteht in einer zweckmäßigen Ausführungsform ausschließlich aus Kunststoffmaterialien.

Andererseits ist unter gewissen Umständen die Kombination mit Scheiben aus anorganischem Mineralglas möglich. Im Gegensatz zu den aus dem Stand der Technik bekannten Verglasungen werden Mineralglasscheiben im Zusammenhang mit der Erfindung ausschließlich in einer sehr geringen Stärke und bevorzugt auf der beschußgefährdeten Angriffsseite eingesetzt. Mineralglasscheiben in einer Dicke von etwa 0,5 bis 3 mm, die als Vorsatzscheibe in dem durchschußhemmenden Verglasungsaufbau gemäß der Erfindung eingesetzt werden, gewährleisten insbesondere eine kratzfeste Ausführung und damit eine längere Lebensdauer der gefahrgeneigten Seite. Die Verwendung stärkerer Mineralglasscheiben als 3 mm ist im Rahmen der Erfindung nicht bevorzugt, da dies zu einer erheblichen nachteiligen Beeinflussung des Gesamtgewichts des erfindungsgemäßen Aufbaus führt.

Es sind auch noch weitere Abwandlungen vom grundlegenden Aufbau der erfindungsgemäßen durchschußhemmenden Verglasungen möglich. So ist es weiterhin möglich, die durchschußhemmende Verglasung gemäß der Erfindung mit einer wärmereflektierenden Folienbeschichtung zu versehen. Hiermit kombinierbar oder auch alternativ dazu möglich, ist der Einsatz von einbetteten Drähten, die beispielsweise in eine der Kunststoffglasscheiben integriert sind, wobei die eingebetteten Drähte zur Ausbildung eines integrierten Alarmsystemes dienen können. Schließlich ist alternativ zur Kratzfest-Ausrüstung mittels Mineralglasscheiben auch ein Verbund der hierin beschriebenen Art möglich, welcher zusätzlich mit einer kratzfesten Folie beschichtet ist.

Gegenstand der Erfindung ist auch die Verwendung einer durchschußhemmenden Verglasung, wie sie hierin beschrieben ist, zur Verminderung des Durchgangs von Geschossen üblicher Waffen und Munitionsarten dergestalt, daß eine Polycarbonatabschlußscheibe der beschußgefährdeten Seite abgewandt ist. Wie bereits hierin erwähnt, kann damit die beschußfeste Verglasung gemäß ihrem unidirektionalen durchschußhemmenden Charakter insbesondere als durchschußhemmende Verglasung im Bereich von Geldinstituten zum Personenschutz eingesetzt werden. Darüber hinaus ist insbesondere im Zusammenhang mit integrierten Alarmsystemen, aber unabhängig vom unidirektionalen Beschußfestcharakter, auch die Verwendung derartiger erfindungsgemäßer Aufbauten in entfernt liegenden Wohnhäusern oder auch als Fenster denkbar, um derart die Inhaber vor Einbrüchen und Überfällen zu schützen. Somit ist auch eine wirksame Einbruchsicherung mit der beschußfesten Verglasung gemäß der vorliegenden Erfindung gegeben.

Nachfolgend wird die Erfindung unter Bezugnahme auf die beigefügten Figuren sowie anhand von Beispielen eingehender erläutert.

In den Figuren zeigen:
- Fig. 1: die perspektivische Darstellung einer ersten erfindungsgemäßen Ausführungsform in Explosionsdarstellung;
- Fig. 2: eine perspektivische Ansicht einer weiteren erfindungsgemäßen Ausführungsform in Explosionsdarstellung;
- Fig. 3: eine perspektivische Ansicht einer weiteren erfindungsgemäßen Ausführungsform mit integrierter Splittersicherung in Explosionsdarstellung;
- Fig. 4: in perspektivischer Ansicht eine Darstellung einer weiteren erfindungsgemäßen Ausführungsform;
- Fig. 5: in perspektivischer Ansicht eine Explosionsdarstellung noch einer weiteren erfindungsgemäßen Ausführungsform mit integrierter Splittersicherung;
- Fig. 6: eine perspektivische Ansicht noch einer weiteren erfindungsgemäßen Ausführungsform mit integrierter Splitterbindung in Explosionsdarstellung;
- Fig. 7: eine nicht erfindungsgemäße Ausführungsform in perspektivischer Ansicht;
- Fig. 8: ebenfalls eine nicht erfindungsgemäße Ausführungsform in perspektivischer Ansicht;
- Fig. 9: die perspektivische Explosionsdarstellung einer weiteren nicht erfindungsgemäßen Ausführungsform und
- Fig. 10: noch eine weitere nicht erfindungsgemäße Ausführungsform in perspektivischer Ansicht und Explosionsdarstellung.

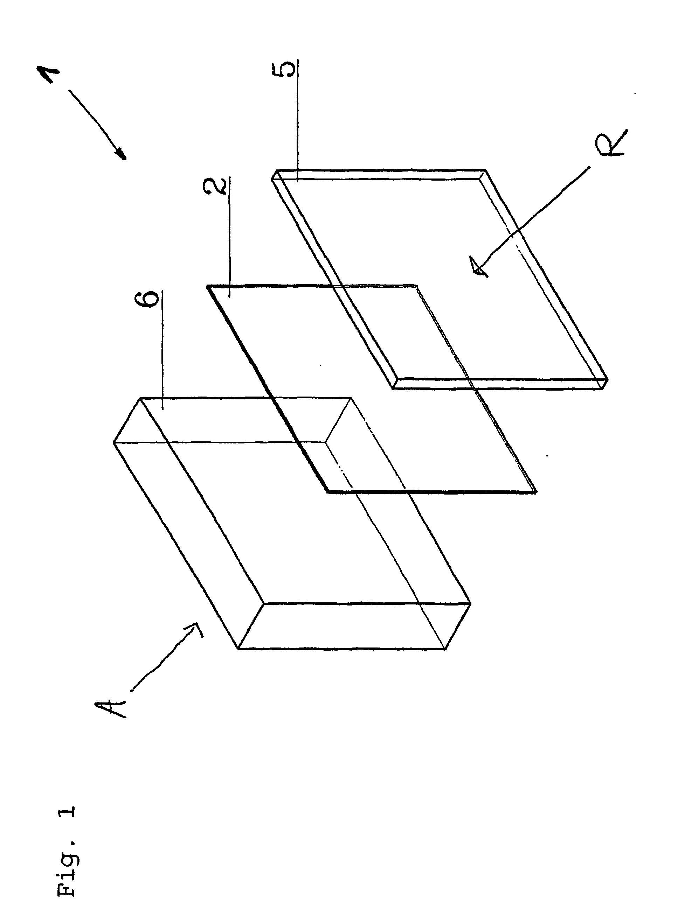

In Fig. 1 ist mit 1 eine erfindungsgemäße beschußfeste Verglasung bezeichnet. Diese weist drei Komponenten in Kombination auf. 6 steht für eine 25 mm-dicke Acrylglasscheibe. 2 bedeutet eine 175 µ-dicke Kunststoffolie aus Polyterephthalsäureethandiolester, während 5 eine 5 mm-dicke Polycarbonatscheibe bedeutet. Die Scheibenelemente und Folie werden eng aneinanderliegend angeordnet, wobei dies durch Verklebung oder einen nicht weiter dargestellten Rahmen geschehen kann. Die Angriffsseite, d. h. die beschußgefährdete Seite, ist in der Darstellung in Fig. 1 mit A angedeutet, während die Rückseite mit R bezeichnet ist. Der gezeigte Aufbau widersteht einem Beschuß entsprechend der Einteilung der ÖNORM EN 1063 der Beschußklasse B4.

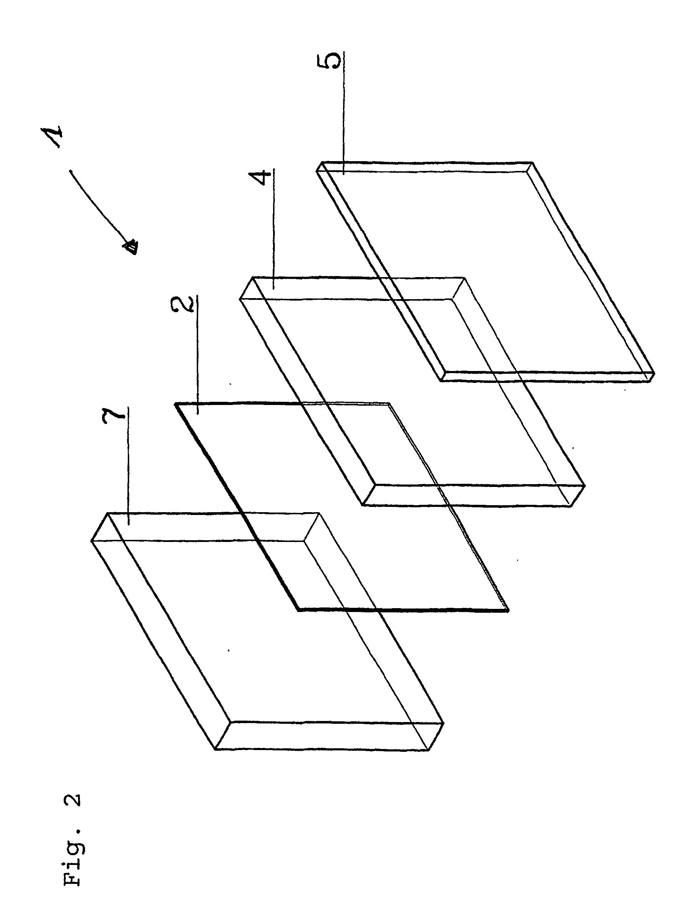

Fig. 2 zeigt eine erste Abwandlung des erfindungsgemäßen Aufbaus, wie er in Fig. 1 dargestellt ist. Die in Fig. 1 mit 6 bezeichnete 25 mm-PMMA-Scheibe wird bei der Ausführungsform gemäß Fig. 2 durch zwei Acrylglasscheiben 4 und 7 ersetzt. Die Scheibe 4 hat dabei in der gezeigten Ausführungsform eine Dicke von 12 mm, während die Scheibe 7 eine Dicke von 15 mm aufweist. Die Folie 2 kann wahlweise auf der Scheibe 4 oder der Scheibe 7 fixiert werden, wonach der gesamte Aufbau entweder durch Verkleben oder durch Fixierung in einem Rahmen weiter zusammengefügt werden kann.

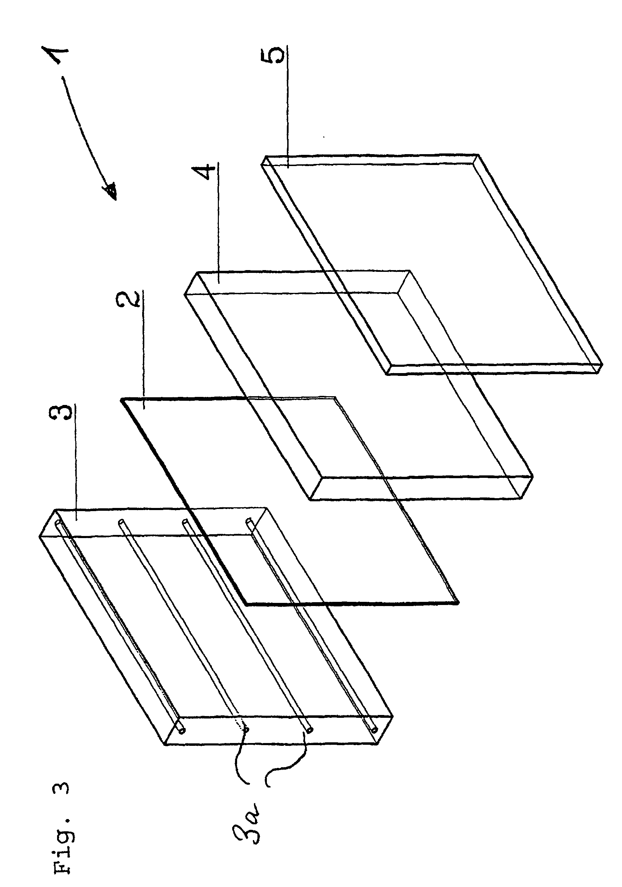

Bei der in Fig. 3 dargestellten Ausführungsform wird die Scheibe 7 durch eine Acrylglasscheibe 3 ersetzt, welche eingebettete Kunststoffäden 3a aus beispielsweise Polyamid aufweist. Diese tragen als integrierte Elemente zur Splitterbindung bei Beanspruchung bei.

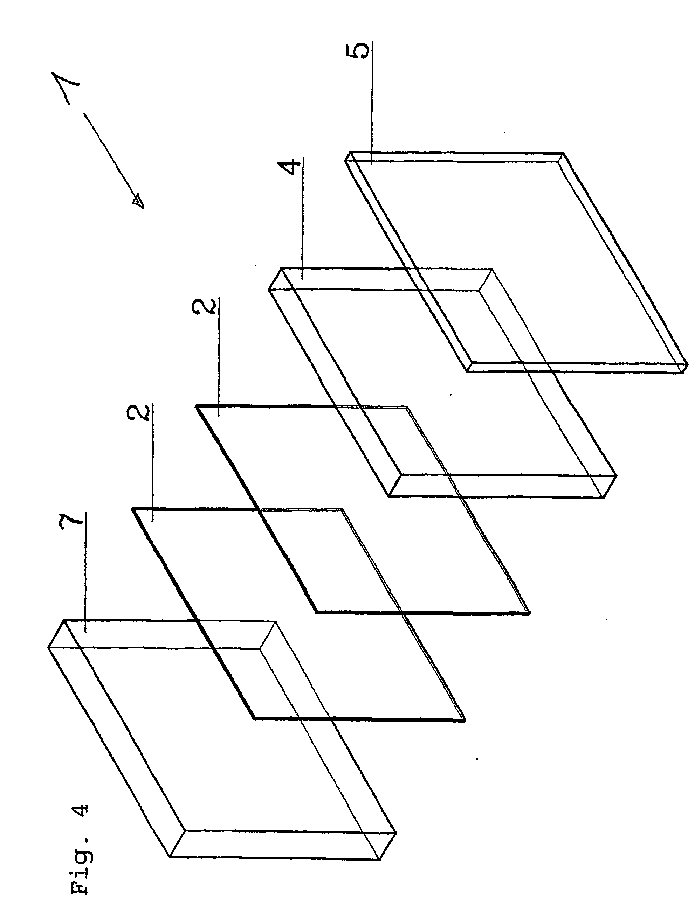

Die Ausführungsform gemäß Fig. 4 verdeutlicht, daß am erfindungsgemäßen Aufbau auch mehrere Folien 2 beteiligt sein können. Diese können gleich oder unterschiedlich ausgebildet sein. Insbesondere kann eine erste Folie 2 auf die nicht der beschußgefährdeten Seite zugewandten Seite der Acrylglasscheibe 7 fixiert werden, während eine zweite Folie 2 auf die der beschußgefährdeten Seite zugewandte Seite der Acrylglasscheibe 4 fixiert werden kann. In jedem Falle bildet keine der Folien 2 einen Abschluß der erfindungsgemäßen durchschußhemmenden Verglasung aus.

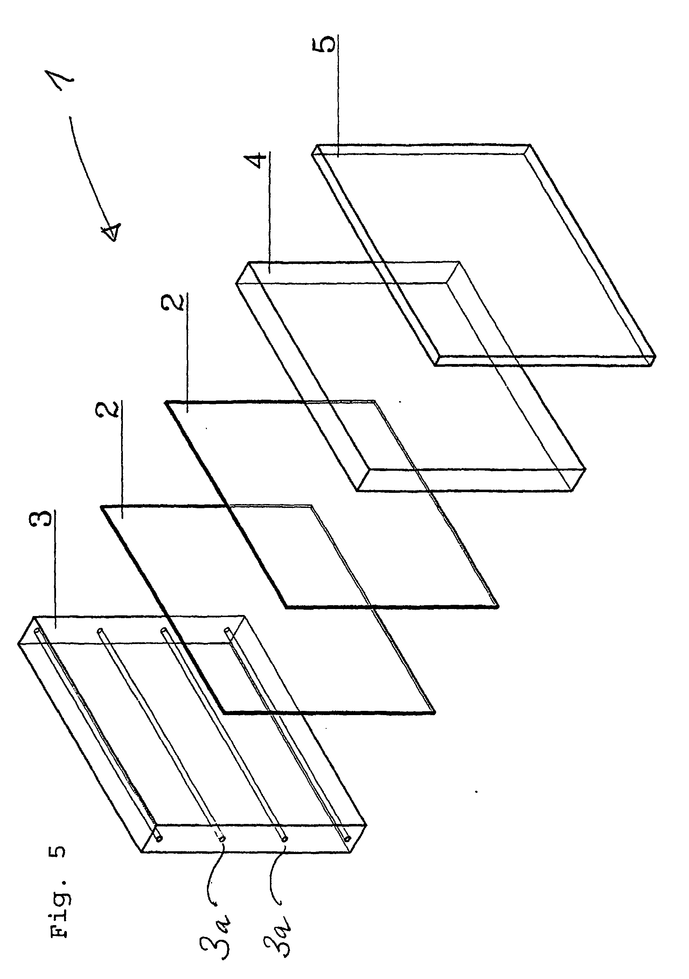

Fig. 5 wiederum zeigt eine Abwandlung des in Fig. 4 gezeigten Aufbaus, bei der ebenfalls eine Acrylglasscheibe 7 durch eine Acrylglasscheibe 3 mit integrierter Splitterbindung in Form von Polyamidfäden 3a ersetzt ist. Ansonsten ist der Aufbau, wie er in Fig. 5 zu sehen ist, dem in Fig. 4 aufgezeigten Aufbau vergleichbar.

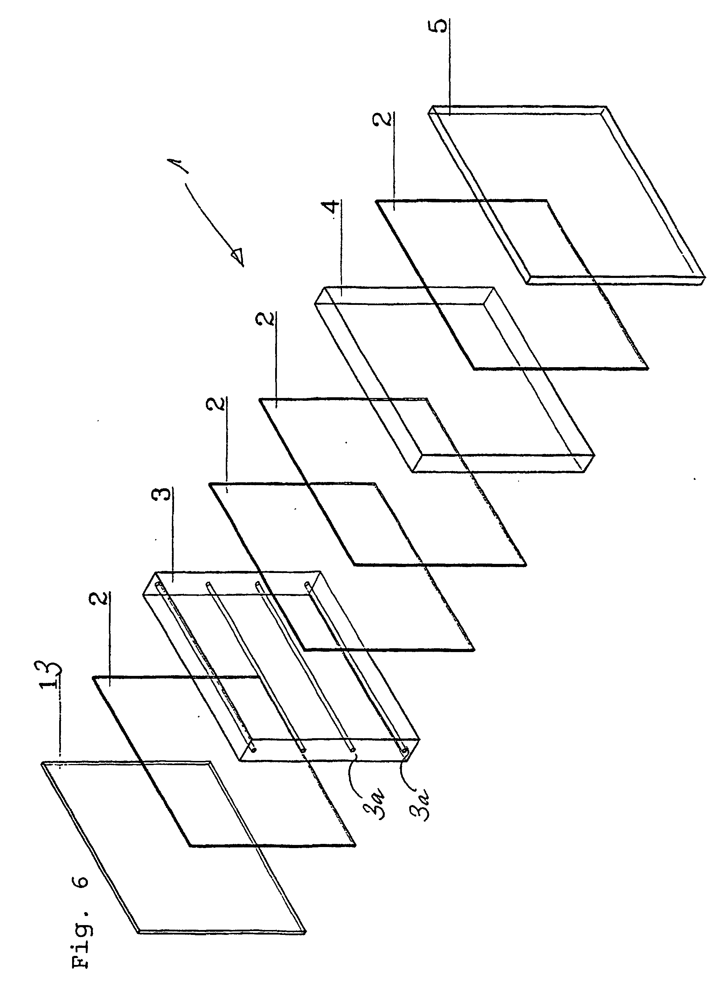

Noch eine weitere Abwandlung der Erfindung ist in der Fig. 6 dargestellt. Der Aufbau entspricht zunächst dem in Fig. 5 gezeigten Aufbau, wobei jedoch auf die Abschlußseite der mit integrierter Splitterbindung (3, 3a) ausgerüsteten Acrylglasscheibe 3 eine anorganische Mineralglasscheibe 13 mittels einer weiteren Folie 2 aufkaschiert ist. Die Folie 2 wird dabei bevorzugt auf der entsprechenden Seite der Acrylglasscheibe 3 fixiert und mit der Mineralglasscheibe 13 durch geeignete Kleber verklebt.

Jede der in den Figuren 1 bis 6 gezeigten Ausführungsform widersteht den Angriffsbeanspruchungen der Klasse B4 gemäß Entwurf ÖNORM EN 1063.

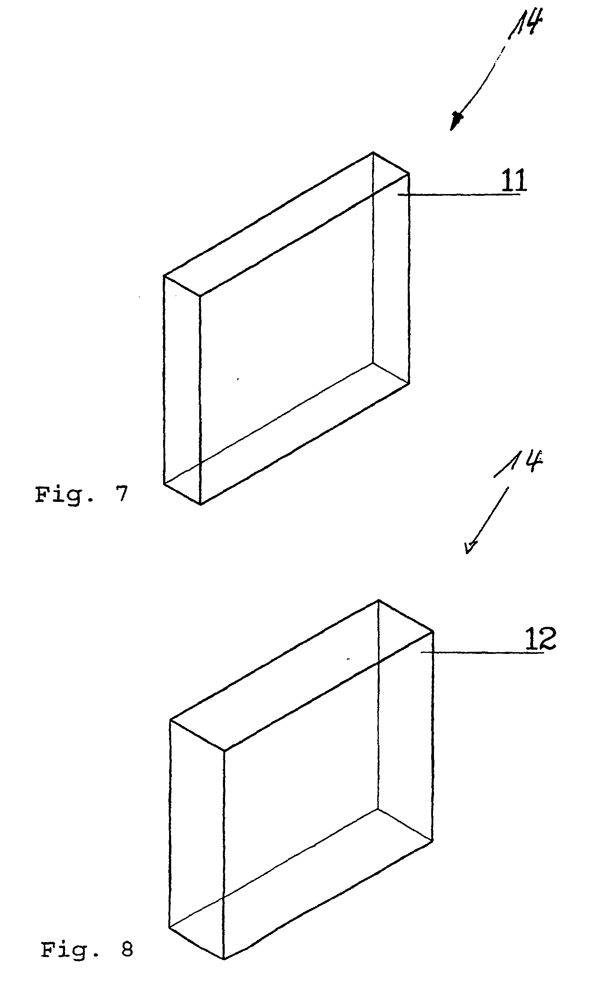

Zum Vergleich werden in den Figuren 7 bis 10 Ausführungsformen dargestellt, die nicht zur Erfindung gehören und die diese ÖNORM hinsichtlich der Angriffsbeanspruchungen der Klasse B4 nicht erfüllen. Hierzu gehört u. a. die Ausführungsform gemäß Fig. 7, die lediglich aus einer 20 mm-Acrylglasplatte besteht. Hierzu gehört auch in Fig. 8 dargestellte Abwandlung, bei der eine 30 mm-Acrylglasplatte mit 12 bezeichnet ist.

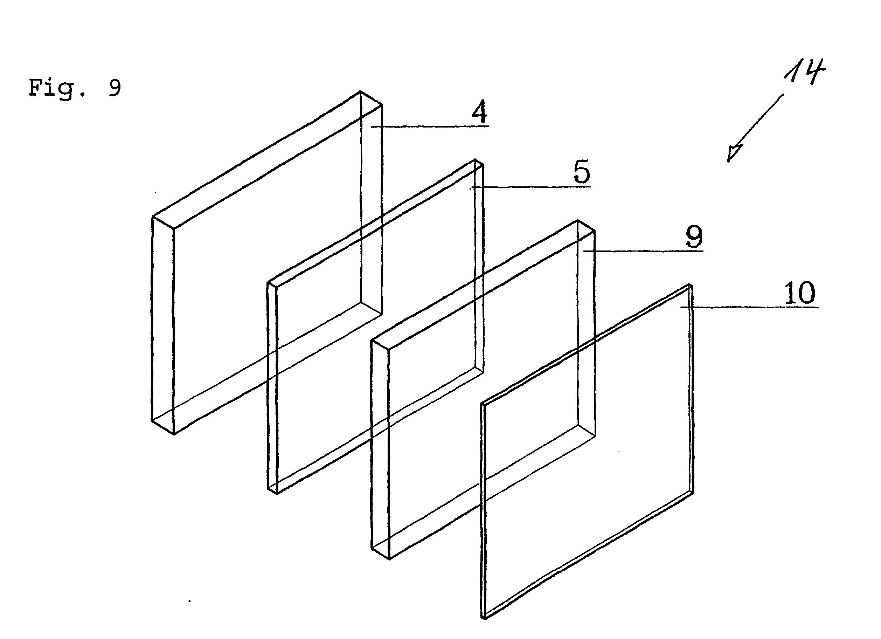

Fig. 9 stellt einen Aufbau dar, welcher aus 12 mm-PMMA (Bezugszeichen 4), einer 5 mm-Polycarbonatscheibe 5, einer 10 mm-PMMA-Scheibe 9 und einer 2 mm-Polycarbonatscheibe 10 besteht. Obwohl hinsichtlich der Dicke bzw. Gesamtdicke der PMMA- und Polycarbonatscheiben die Mindestanforderungen, wie sie für erfindungsgemäße Aufbaue resultieren, erfüllt sind, ist durch das Fehlen einer Folienschicht 2 die Energieaufnahme zu gering, so daß der Aufbau gemäß Fig. 9 im Beschußtest gemäß der Klasse B4 versagt.

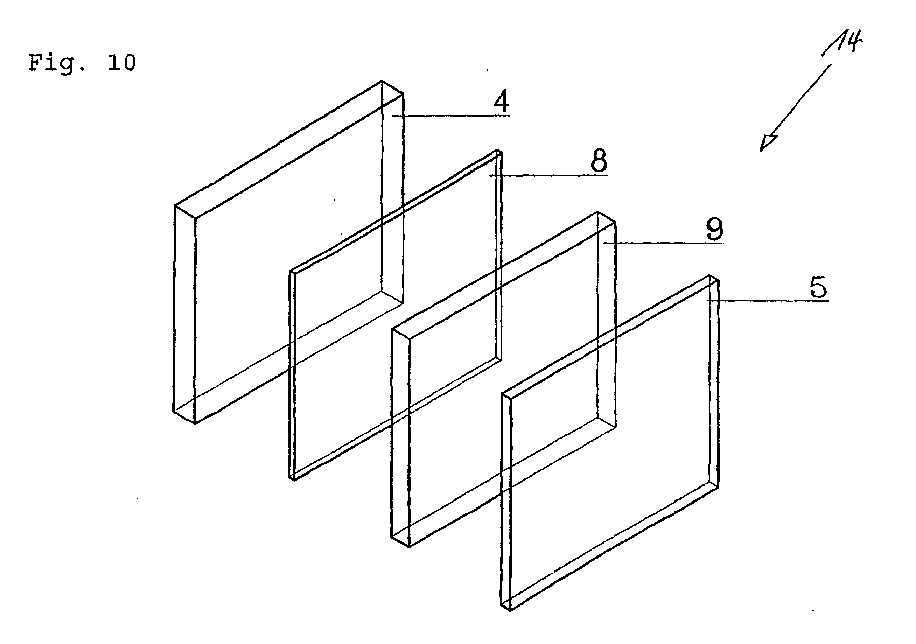

Ähnliches gilt für den Aufbau gemäß Fig. 10, welcher eine 12 mm-Acrylglasscheibe, eine 3 mm-Polycarbonatscheibe 8, eine 10 mm-PMMA-Scheibe 9 und 5 mm-Polycarbonatscheibe 5 umfaßt. Auch hier wird aufgrund des Fehlens der Folie 2 die Angriffsbeanspruchung der Klasse B4 gemäß Entwurf ÖNORM EN 1063 nicht erfüllt.

Nachfolgend wird die Herstellung eines erfindungsgemäßen Verbundsystems beschrieben, wie es in Figur 4 dargestellt ist.

### Beispiel 1

Das System besteht aus einer 15 mm Gußglasplatte, einer darauf aufkaschierten Polyethylenterephthalatfolie, weiterhin einer 12 mm PMMA-Gußglasplatte, die ebenfalls mit einer Polyethylenterephthalatfolie kaschiert wurde, den Abschluß des Verbundes bildet eine 5 mm Polycarbonatplatte.

Die Herstellung dieses Verbundsystemes teilt sich in drei Teilschritte:
- Teilschritt 1:: Zuschnitt aller PMMA / und Polycarbonatplatten. Je nach Bedarf werden die entsprechenden Formate für ein Verbundsystem zugeschnitten. Hierzu eignen sich alle handelsüblichen und in der Literatur bekannten Sägewerkzeuge für PMMA und Polycarbonat.
- Teilschritt 2:: Kaschierung der Polyethylenterephthalatfolie auf die PMMA-Platten. Bevor die Polyethylenfolie auf die PMMA-Platte appliziert wird, wird ein entsprechendes Befeuchtungs- und Aktivierungsmittel für die Folie auf die PMMA-Platte gebracht, danach mittels Druckrollen die PET-Folie blasen- und faltenfrei aufkaschiert.
- Teilschritt 3:: Zusammenfügung
Mit Hilfe eines 4 cm breiten, stoffverstärkten Klebebandes wird der Plattenverbund (drei Stück) am Rande zusammen fixiert. Das so erhaltene Verbundsystem kann dann in entsprechende Metallrahmen eingepaßt werden und ist somit verwendungsfähig.

Die im Beispiel hergestellten Verglasungen wurden folgendermaßen untersucht:

Die durchschußhemmende Wirkung und Splitterbindung der Verglasungen aus den Beispielen X und Vergleichsbeispielen Y wurde, wie in ÖNORM EN 1063 - Entwurf vom 1. Juni 1993, beschrieben, untersucht. Dabei wurden von den beispielhaft und in Vergleichsbeispielen hergestellten Verglasungen Meßproben genommen. Hierbei handelt es sich bei Meßproben um Einheiten von Stichproben, die zur Prüfung vorbereitet sind. Stichproben sind eine bestimmte Anzahl nominell identischer Verglasungseinheiten, die zur Typprüfung für eine bestimmte Klasse bereitgestellt werden. Die Stichproben, die zur Typprüfung bereitgestellt werden, bestanden für jede geprüfte Klasse aus drei Meßproben. Die Größe der Meßproben betrug 500 ± 5 mm². Die Kanten der Meßproben wurden wegen der besseren Handhabung fein bearbeitet.

Die Meßproben wurden konditioniert und in starren Rahmen senkrecht in dem in Tabelle 1 angegebenen Abstand von der Mündung der Waffe eingespannt. Die Einspannung der Meßproben erfüllte dabei folgende Anforderungen:
- die Meßprobe wurde senkrecht zur Schußlinie eingespannt;
- zwischen den Glaskanten und dem Rahmen wurden Streifen aus Neoprengummi der Shore A-Härte 50 ± 10 mit einer Dicke von 5 mm und einer Breite von 30 ± 5 mm vorgesehen;
- unter der Standkante der Meßprobe wurde ein Streifen aus Neoprengummi der Shore A-Härte 50 ± 10 mit einer Dicke von 5 mm und einer Breite, die gleich der gesamten Dicke der Meßprobe war, vorgesehen;
- alle vier Glaskanten wurden über eine Breite von 30 ± 5 mm von Hand gleichmäßig so eingespannt, daß eine freie Trefferfläche von ungefähr 440 x 440 mm verblieb;
- der Anpreßdruck war so hoch, daß die Glaskanten während der Prüfung am Ort blieben, wobei andererseits gewährleistet wurde, daß keine Spannungen erzeugt werden, die das Ergebnis beeinflussen können.

Von der Rückseite der Meßprobe ggf. abgehende Glassplitter und durch die Meßprobe durchdringende Geschoßteile wurden in einem Splitterauffangkasten, der sich hinter der Meßprobe befand und fest mit dem starren Rahmen verbunden ist, gesammelt. Der Splitterauffangkasten hatte von vorn eine Öffnung von 440 x 440 mm, die zur Auftrefffläche im Rahmen paßt.

Das Verletzungspotential der von der Rückseite abgehenden Glassplitter wurde durch einen Splitterindikator bestimmt. Der Splitterindikator besteht aus einer Aluminiumfolie mit einer Dicke von 0,02 mm und einem Flächenmaß von 54 g/m². Die Aluminiumfolie wurde im Splitterauffangkasten senkrecht in einem Abstand von 500 mm hinter der Meßprobe montiert und hatte eine freie Fläche von mindestens 440 x 440 mm, welche insbesondere zur Trefferfläche paßte. Die Aluminiumfolie wurde an ihren Rändern fest montiert. Sie war dabei so starr montiert, daß sie während der Prüfung an ihrem Platz blieb.

Die Geschoßgeschwindigkeit wurde mit einer elektronischen Meßeinrichtung nicht mehr als 2,5 m von der Vorderseite der Meßprobe entfernt gemessen. Die Messung war auf 1,0 m/s genau. Hierbei wird davon ausgegangen, daß die Geschoßgeschwindigkeit 2,5 m vor der Meßprobe der Auftreffgeschwindigkeit entspricht.

Tabelle 1 enthält weiterhin die benötigten Waffen und Munitionsarten.

Die Meßproben wurden vor der Prüfung mindestens 12 h bei einer Temperatur von 18 ± 5 °C gelagert.

Die Messungen wurden gemäß der ÖNORM EN 1063 durchgeführt. Hierbei wurde insbesondere auf jede Meßprobe drei Schüsse entsprechend den Bedingungen der ÖNORM EN 1063 abgegeben, um die Geschoßgeschwindigkeit zu messen. Die Abstände der Mittelpunkte der Treffer beliefen sich dabei im durch die Norm vorgegebenen Rahmen. Im Ergebnis wurde angenommen, daß eine Prüfung die funktionellen Anforderungen an eine bestimmte Widerstandsklasse gegen Durchschuß erfüllt, wenn die Geschwindigkeit und der Trefferabstand den Anforderungen entsprach.

Der Verbund gemäß Beispiel 1 erfüllte die Angriffsbeanspruchungen der Klasse B4 gemäß Entwurf ÖNORM EN 1063.

## Patentansprüche

1. Durchschußhemmende Verglasung, die den Angriffsbeanspruchungen der Klasse B4 gemäß Entwurf ÖNORM EN 1063 widersteht, aus einer Kombination von zwei oder mehreren aneinander anliegenden oder miteinander verbundenen lichtdurchlässigen Scheiben, mit wenigstens einer Acrylglasscheibe und einer der beschußgefährdeten Angriffsseite abgewandten rückseitigen splitterbindenden Scheibe aus Polycarbonat,
**dadurch gekennzeichnet,**
**daß** die Kombination wenigstens eine nicht außenliegende mehrlagige Kunststoff-Folie auf Basis von PVC-, PC- und/oder PET-Materialien mit einer Dicke zwischen 20 und 500 µm aufweist, wobei die Folie selbstklebend oder durch Verklebung zwischen den Scheiben fixiert ist.

2. Durchschußhemmende Verglasung nach Anspruch 1,
**dadurch gekennzeichnet,**
**daß** die Scheiben und Folien dicht aneinander anliegen und mit einem Rahmen fixiert sind.

3. Durchschußhemmende Verglasung nach Anspruch 1,
**dadurch gekennzeichnet,**
**daß** die Folie auf der in der Kombination innenliegenden Seite einer Acrylglasscheibe durch Verklebung fixiert ist.

4. Durchschußhemmende Verglasung nach einem der vorhergehenden Ansprüche,
**dadurch gekennzeichnet,**
**daß** ein oder mehrere Acrylglasscheiben miteinander kombiniert werden, deren Gesamtdicke > 20 mm ist.

5. Durchschußhemmende Verglasung nach einem der vorhergehenden Ansprüche,
**dadurch gekennzeichnet,**
**daß** ein oder mehrere Polycarbonatscheiben in der Kombination enthalten sind, von denen eine die Rückseite ausbildet, wobei die Gesamtdicke der Polycarbonatscheiben ≥ 5 mm ist.

6. Durchschußhemmende Verglasung nach einem der vorhergehenden Ansprüche,
**dadurch gekennzeichnet,**
**daß** die Gesamtzahl aller Lagen der ein- oder mehrlagigen Folien ≥ 4 ist.

7. Durchschußhemmende Verglasung nach einem oder mehreren der vorhergehenden Ansprüche,
**dadurch gekennzeichnet,**
**daß** die oder eine der Acrylglasscheiben eingebettete monofile Kunststoff-Fäden aufweist.

8. Durchschußhemmende Verglasung nach einem oder mehreren der vorhergehenden Ansprüche,
**dadurch gekennzeichnet,**
**daß** sie ausschließlich aus Kunststoffmaterialien besteht.

9. Durchschußhemmende Verglasung nach einem oder der Ansprüche 1 - 7,
**dadurch gekennzeichnet,**
**daß** sie als Abschlußscheibe auf der beschußgefährdeten Angriffsseite eine Scheibe aus anorganischem Mineralglas aufweist.

10. Verwendung einer durchschußhemmenden Verglasung gemäß einem oder mehreren der vorhergehenden Ansprüche zur Verhinderung des Durchgangs von Geschossen üblicher Waffen und Munitionsarten dergestalt, daß eine Polycarbonat-Abschlußscheibe der beschußgefährdeten Seite abgewandt ist.

## Claims

1. Bulletproof glass which withstands aggressive attack of class B4 according to draft European Standard EN 1063, consisting of a combination of two or more abutting or interconnected translucent sheets, having at least one sheet of acrylic glass and one splinter-binding backing sheet of polycarbonate on the side remote from the risk of bullet attack, **characterised in that** the combination comprises at least one non-external multi-layered plastics film based on PVC, PC and/or PET materials with a thickness of between 20 and 500 µm, the film being fixed in self-adhesive manner or by adhesive bonding between the sheets.

2. Bulletproof glass according to claim 1, **characterised in that** the sheets and films abut closely on one another and are secured with a frame.

3. Bulletproof glass according to claim 1, **characterised in that** the sheet is fixed by adhesive bonding to the side of a sheet of acrylic glass which is on the inside of the combination.

4. Bulletproof glass according to one of the preceding claims, **characterised in that** one or more sheets of acrylic glass are combined, their total thickness being > 20 mm.

5. Bulletproof glass according to one of the preceding claims, **characterised in that** the combination includes one or more sheets of polycarbonate, one of which forms the back, the total thickness of the polycarbonate sheets being ≥ 5 mm.

6. Bulletproof glass according to one of the preceding claims, **characterised in that** the total number of all the layers of the single- or multi-layer films is ≥ 4.

7. Bulletproof glass according to one or more of the preceding claims, **characterised in that** the acrylic glass sheet or one of the acrylic glass sheets contains monofilament plastic threads embedded therein.

8. Bulletproof glass according to one or more of the preceding claims, **characterised in that** it consists exclusively of plastics materials.

9. Bulletproof glass according to one of claims 1 to 7, **characterised in that** it comprises a sheet of inorganic mineral glass as the finishing sheet on the side exposed to bullet attack.

10. Use of a bulletproof glass according to one or more of the preceding claims for preventing the penetration of projectiles from conventional weapons and types of munitions, wherein a polycarbonate finishing sheet is remote from the side exposed to bullet attack.

## Revendications

1. Vitrage de sécurité anti-balles qui résiste aux conditions d'attaque de classe B4 selon le projet ÖNORM EN 1063, formé d'une combinaison de deux ou plusieurs vitres transparentes à la lumière, appliquées l'une contre l'autre ou reliées l'une à l'autre, comprenant au moins une vitre de verre acrylique et d'une vitre en polycarbonate fixant les éclats, du côté arrière à l'opposé à l'opposé du côté d'attaque,
**caractérisé en ce que**
la combinaison comporte au moins une feuille de matière plastique à plusieurs couches non placée à l'extérieur, cette feuille étant à base de PVC, PC et/ou PET d'une épaisseur comprise entre 20 et 500 µm, la feuille étant autocollante ou fixée entre les vitres par collage.

2. Vitrage de sécurité anti-balles selon la revendication 1,
**caractérisé en ce que**
les vitres et les feuilles sont appliquées étroitement les unes contre les autres et elles sont bloquées par un cadre.

3. Vitrage de sécurité anti-balles selon la revendication 1,
**caractérisé en ce que**
la feuille est bloquée par collage contre le côté intérieur dans la combinaison, d'une vitre en verre acrylique.

4. Vitrage de sécurité anti-balles selon l'une des revendications précédentes,
**caractérisé en ce qu'**
on combine une ou plusieurs vitres en verre acrylique dont l'épaisseur globale est supérieure à 20 mm.

5. Vitrage de sécurité anti-balles selon l'une des revendications précédentes,
**caractérisé en ce que**
la combinaison comporte une ou plusieurs vitres en polycarbonate dont l'une constitue le côté arrière et l'épaisseur totale des vitres en polycarbonate est ≥ 5 mm.

6. Vitrage de sécurité anti-balles selon l'une des revendications précédentes,
**caractérisé en ce que**
le nombre total de toutes les couches des feuilles à une ou plusieurs couches est ≥ 4.

7. Vitrage de sécurité anti-balles selon l'une ou plusieurs des revendications précédentes,
**caractérisé en ce que**
les ou une des vitres en verre acrylique comportent des monofils de matière plastique, intégrés.

8. Vitrage de sécurité anti-balles selon l'une ou plusieurs des revendications précédentes,
**caractérisé en ce qu'**
elles se composent exclusivement de matières plastiques.

9. Vitrage de sécurité anti-balles selon les revendications 1 à 7,
**caractérisé en ce que**
la vitre extérieure du côté du risque comporte une vitre en verre minéral anorganique.

10. Utilisation d'un vitrage anti-balles selon une ou plusieurs des revendications précédentes, pour éviter le passage de projectiles d'armes ou de types de munitions habituelles, avec une vitre en polycarbonate sur le côté exposé aux tirs.
